# EUROPEAN PATENT SPECIFICATION

(11) **EP 4 601 084 B1**
(45) Date of publication and mention of the grant of the patent: **07.10.2026**
(21) Application number: 24156839.3
(22) Date of filing: 09.02.2024
(51) Int. Cl.: H01M 50/103, H01M 50/209, H01M 50/251, H01M 50/317, H01M 50/358, H01M 50/249

(54) **BATTERY PACK WITH INDIVIDUAL CELL VENTING**
BATTERIEPACK MIT EINZELZELLENBELÜFTUNG
BLOC-BATTERIE À VENTILATION INDIVIDUELLE DES CELLULES

(43) Date of publication of application: 13.08.2025
(73) Proprietor: VOLVO TRUCK CORPORATION, 405 08 Göteborg (SE)
(72) Inventor: LINDELÖW, Fredrik, 541 94 SKÖVDE (SE); IRANNEZHAD, Mike, 411 20 GÖTEBORG (SE); JONSSON, Kasper, 417 57 GÖTEBORG (SE)
(74) Representative: Kransell & Wennborg KB

(56) References cited:
- EP-A2- 4 184 692
- CN-A- 114 583 382
- DE-A1- 102013 014 929

## Description

### TECHNICAL FIELD

The disclosure relates generally to the field of battery packs. In particular aspects, the disclosure relates to thermal runaway of battery cells in battery packs, and how to prevent thermal runaway spread. The disclosure can be applied to battery packs as used in heavy-duty vehicles, such as trucks, buses, and construction equipment, among other vehicle types. Although the disclosure may be described with respect to a particular vehicle, the disclosure is not restricted to any particular vehicle.

### BACKGROUND

If an internal temperature of a battery cell of a battery pack reaches above a critical value, a chemical chain reaction may occur which fuels itself by generating even more heat. Such a chain reaction is also referred to as thermal runaway, and may be difficult or impossible to control once initiated. During thermal runaway, gassing of the battery cell may generate both exhaust gases and particles whose temperature may reach above 1000 °C.

To keep the batteries from exploding, a battery cell may be provided with one or more degassing valves (or cell vents) to provide at least some pressure relief. However, as the gases and particles that exit the valve of the battery cell currently experiencing thermal runaway are still hot, such gases and particles may start to heat up adjacent battery cells and eventually cause these other cells to enter thermal runaway themselves, leading to so-called thermal runaway spread within the battery pack. EP 4 184 692 A1 discloses a battery system including at least one Lithium-ion cell and conduits for routing of gas and/or particles from the at least one cell. CN 114 583 382 A discloses a Lithium battery system with movable conduits for routing of gas and/or particles from battery cells. DE 10 2013 014929 A1 discloses the use of a degassing device common to multiple battery cells.

The present disclosure aims at further developing contemporary battery pack technology and to mitigate one or more such shortcomings thereof.

### SUMMARY

The invention is defined by the subject-matter of the independent claim. The dependent claims are directed to advantageous embodiments. In order to mitigate the problem of thermal spread within a battery pack, the present disclosure proposes to provide individual venting of gasses and/or particles from each battery cell, in a way which reduces the risk of hot gasses and particles spreading from one battery cell to another. For this purpose, the present disclosure provides an improved battery module for a battery pack, a battery pack, a battery cell, a heavy electric vehicle and an energy storage system as defined in and by the accompanying independent claims. Various alternatives of the battery module, battery pack, battery cell, heavy electric vehicle and energy storage system are defined in and by the accompanying dependent claims.

According to a first aspect of the present disclosure, there is provided a battery module for a battery pack of a heavy electric vehicle. The battery module includes a plurality of battery cells, wherein each battery cell includes a degassing valve for releasing gas and/or particles from within the battery cell. The battery module further includes a plurality of venting tubes, including at least one venting tube for each battery cell. The at least one venting tube for each battery cell is configured to provide an individual conduit for routing of gas and/or particles from the degassing valve of the battery cell to an outside of a boundary of the battery module. The first aspect of the disclosure may seek to solve the problem of thermal runaway spread. A technical benefit may include that by individually forcing the gasses and/or particles from a battery cell to outside of a boundary of the battery module, the risk of such gasses and/or particles bouncing back and forth and eventually reaching another battery cell is reduced, which reduces the risk of thermal runaway spread. This in contrast to contemporary technology, wherein a shared venting manifold is often used to collect the gasses and/or particles from all battery cells, which allows hot gasses and/or particles from one battery cell to reach and heat up an adjacent battery pack which increases the risk of thermal runaway spread. As used herein, it is acknowledged that "gas" of course also consist of particles (gas molecules). As used herein, "particles" is meant to represent other particulates than individual gas molecules, such as those of ash, soot or other non-gaseous particles that may be created/released as part of a battery cell experiencing thermal runaway.

Optionally, in some examples of the battery module, including in at least one preferred example, the battery cells may have rectangular cuboid shapes. A technical benefit may include that the rectangular cuboid shape (in contrast to the shape of e.g. a cylindrical battery cell) allows for denser packing of the battery cells within the battery module, allowing for an increased energy storage density.

Optionally, in some examples of the battery module, including in at least one preferred example, the battery cells may be prismatic battery cells. Prismatic battery cells are examples of battery cells usually having rectangular cuboid shapes.

Optionally, in some examples of the battery module, including in at least one preferred example, the venting tubes may be configured such that they all extend parallel to each other. In particular, the venting tubes may be configured such that the venting tube of one battery cell does not cross/pass any other battery cell, and/or such that the venting tube of one battery cell does not cross/pass any other venting tube of any other battery cell, thereby further reducing the risk of e.g. hot gasses and/or particles routed through the venting tube of one battery cell heating any other battery cell.

Optionally, in some examples of the battery module, including in at least one preferred example, the battery module may further include a battery module housing that defines the boundary of the battery module. A technical benefit may include that such a housing defining a boundary of the battery module further limits the risk of exhaust gases and/or particles from one cell reaching and heating another battery cell of the battery module, or e.g. another battery cell of another battery module of the battery pack, or similar. In some examples, the battery module housing may enclose the battery cells, and each venting tube may be routed from the respective degassing valve to its own opening in the battery module housing. In some examples, the venting tubes may be oriented such that the gasses and/or particles are routed and released in a direction parallel to a longitudinal extension of the battery module. This may be particularly useful if e.g. multiple battery modules are stacked on top of each other, as the gases and/or particles may then be released away from all battery modules.

Optionally, in some examples of the battery module, including in at least one preferred example, the battery module further includes a plate having a plurality of through-holes. The plate may be positioned on at least some of the plurality of battery cells, such that each through-hole of the plate is at least partially aligned with a respective degassing valve (of a corresponding battery cell), and such that one end of a respective venting tube is connected to a respective through-hole of the plate. A technical benefit may include that with the plurality of battery cells in place, the venting tubes may be installed simultaneously by proper placement of the plate (and connected venting tubes) on the plurality of battery cells. There may of course be provided several plates, each plate responsible for providing the venting tubes on the respective degassing valves of a subset of the plurality of battery cells.

According to a second aspect of the present disclosure, there is provided a battery pack for a heavy electric vehicle. The battery pack includes a battery pack housing. The battery pack further includes a plurality of battery cells provided within the battery pack (e.g. as part of one or more battery modules, or e.g. in a cell-to-pack arrangement/architecture). Each battery cell includes a degassing valve for releasing gas and/or particles from with the battery cell. The battery pack further includes a plurality of venting tubes, including at least one individual venting tube for each battery cell. The at least one venting tube for each battery cell is configured to provide an individual conduit for routing of gas and/or particles from the degassing valve of the battery cell to an inside compartment of the battery pack housing and/or through one or more openings of the battery pack housing. The second aspect of the disclosure may seek to solve the problem of thermal runaway spread as already described herein. A technical benefit may include that the battery pack may not necessarily be based on a cell-to-module architecture only, but instead use e.g. a cell-to-pack architecture. Further, the inside compartment of the battery pack may be designed to receive and e.g. contain the gases and/or particles vented from one or more battery cells, to reduce the risk of such gases and/or particles spreading to other battery cells of the battery pack. For example, the internal compartment may be designed to contain the gases and/or particles and allow them to cool down sufficiently to no longer pose a danger to other battery cells. In other examples, the conduits may individually route the gases and/or particles from each battery cell directly to and through one or more openings of the battery pack housing, thereby further reducing the risk of such gases and/or particles bouncing around within the battery pack and eventually heating up other battery cells.

Optionally in some examples of the battery pack, including in at least one preferred example, the battery pack may include one or more battery modules according to the first aspect. The battery cells of the battery pack may then correspond to (i.e. be) the battery cells of the one or more battery modules, i.e. the battery cells may form part of one or more battery modules. A technical benefit may include that grouping the battery cells into one or more modules may e.g. allow to replace/install several battery cells simultaneously.

Optionally, in some examples of the battery pack, including in at least one preferred example, the plurality of battery cells may form part of a cell-to-pack architecture of the battery pack. A technical benefit may include that by not using e.g. one or more battery modules, the battery cells may be packed more closely and the energy storage density of the battery pack may be increased.

Optionally, in some examples of the battery pack, including in at least one preferred example, the battery pack housing may include one or more gas and/or particle release valves. A technical benefit may include that such one or more release valves of the battery pack housing may be designed to open once an internal pressure of the battery pack housing exceeds a threshold value, or similar, e.g. as pressure builds up within the battery module due to degassing of one or more battery cells.

Optionally, in some examples of the battery pack, including in at least one preferred example, at least one of the one or more release valves of the battery pack housing may be located at the inside compartment of the battery pack, e.g. to make sure that the pressure within this area does not become too high to cause damage to the battery pack (housing).

Optionally, in some examples of the battery pack, including in at least one preferred example, the one or more release valves of the battery pack housing may provide the one or more openings of the battery pack housing to which the gases and/or particles are individually routed and then released through to an outside of the battery module housing. A technical benefit of using valves instead of just openings is that entrance of e.g. gasses and/or particles (or any other substance or objects, such as air, dirt, insects, etc.) from outside to inside of the battery pack may be prevented. This may further prevent e.g. hot gases and/or particles present at the outside of the battery pack to enter the battery pack, and thereby further reduce the risk of e.g. thermal runaway spread between battery packs or between battery cells of a same battery pack.

Optionally, in some examples of the battery pack, including in at least one preferred example, the venting tubes may be configured such that a venting tube for a battery cell does not cross and/or pass any venting tube for any other battery cell, and/or such that a venting tube for a battery cell does not cross and/or pass any other battery cell, with the technical benefit as already described herein.

Optionally, in some examples of the battery pack, including in at least one preferred example, the battery pack may further include a plate having a plurality of through-holes and positioned on the at least some of the plurality of battery cells such that each through-hole is at least partially aligned with a respective degassing valve (of a respective battery cell), and wherein one end of a respective venting tube is connected to a respective through-hole of the plate. A technical benefit may be as already described, namely that installation/removal of multiple venting tubes may be performed on already present battery cells.

According to a third aspect of the present disclosure, there is provided a battery cell (e.g. for a battery module and/or battery pack of a heavy electric vehicle). The battery cell includes a degassing valve for releasing gas and/or particles from within the battery cell (e.g. in case of internal pressure-buildup due to e.g. thermal runaway). The battery cell further includes a venting tube configured to provide a conduit for routing of gas and/or particles from the degassing valve to outside of a boundary of the battery cell. Preferably, a length of the venting tube is long enough such that with the battery cell mounted as part of a battery module, the far end of the venting tube is outside a boundary of the battery module. The length of the venting tube may also be long enough such that it may reach to an internal compartment of a battery pack configured to contain gases and/or particles from one or more battery cells, and/or to reach outside of a housing of the battery pack, such as described earlier herein. The third aspect may seek to solve the problem of thermal runaway spread as described herein, by providing battery cells with their own venting tubes in order to route gasses and/or particles from the battery cell well away from other battery cells.

Optionally, in some examples of the battery cell, including in at least one preferred example, the battery cell may have a rectangular cuboid shape. A technical advantage may be as already described herein, namely to increase the energy storage density when multiple such battery cells are used to form a battery module and/or battery pack. One example may include a prismatic battery cell, and similar.

According to a fourth aspect of the present disclosure, there is provided a heavy electric vehicle. The vehicle includes at least one electrical machine (such as an electrical motor) for propelling the vehicle. The vehicle further includes the battery pack of the second aspect for powering the at least one electrical machine. The fourth aspect may seek to solve the problem of thermal runaway spread in electric vehicles, by providing an electric vehicle having a battery pack with the individual venting tubes as described herein. As used herein, a heavy electric vehicle may for example be an electric bus, truck, hauler, dumper truck, front loader, excavator or any other vehicle used to e.g. move goods and other material, and/or people. As envisaged herein, a heavy electrical vehicle may also be a marine vessel, or any other vehicle which uses electric power stored in one or more battery packs for its propulsion.

According to a fifth aspect of the present disclosure, there is provided an energy storage system. The energy storage system includes at least one battery pack, where the battery pack is the battery pack of the second aspect. The fifth aspect may seek to solve the problem of thermal runaway spread in such equipment, by providing an energy storage system with at least one battery pack with individual battery cell venting that decreases the risk of hot gasses and/or particles from spreading from one battery cell to another, as already described herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGS. 1A and 1B** schematically illustrate exemplary battery modules according to one or more examples of the present disclosure.
**FIGS. 2A and 2B** schematically illustrate exemplary battery packs according to one or more examples of the present disclosure.
**FIGS. 3A and 3B** schematically illustrate exemplary battery cells, including one or more examples according to the present disclosure.
**FIG. 4** schematically illustrates an exemplary heavy electric vehicle according to one or more examples of the present disclosure.
**FIG. 5** schematically illustrates an exemplary energy storage system according to one or more examples of the present disclosure.

### DETAILED DESCRIPTION

The detailed description set forth below provides information and examples of the disclosed technology with sufficient detail to enable those skilled in the art to practice the disclosure.

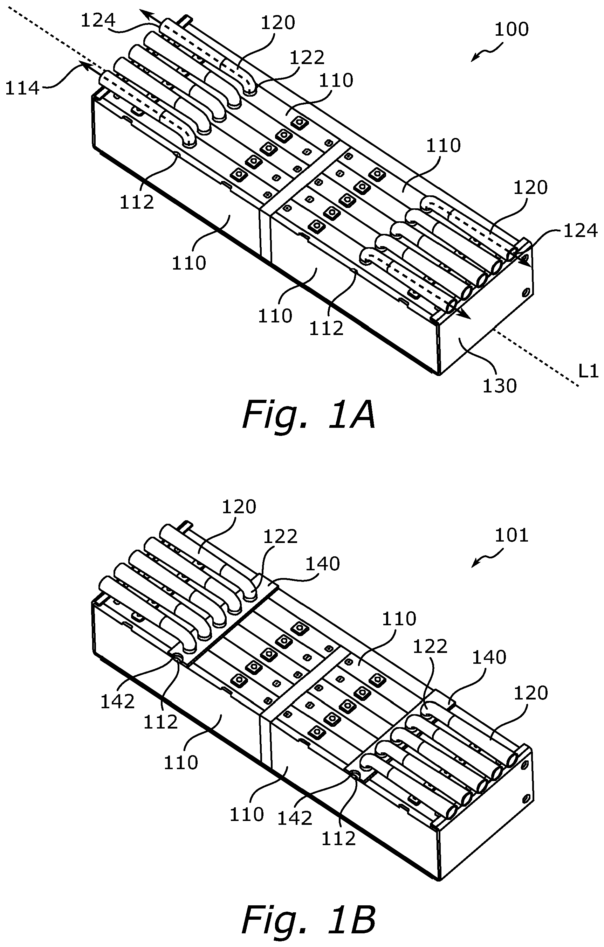

**FIG. 1A** schematically illustrates an exemplary battery module 100 according to an example of the present disclosure. The battery module 100 includes a plurality of battery cells 110. Not all of the battery module 100 is shown in FIG. 1A, and it is envisaged that the battery module may include more battery modules than those shown. Likewise, it is also envisaged that the battery module may, in other examples, include fewer battery modules than those shown.
Each battery cell 110 includes a degassing valve 112 that is configured to release gas (or gasses) and/or particles that are built-up within the corresponding battery cell 110. For example, the degassing valve 112 may be configured to open once a certain pressure is exerted upon it from within the battery cell 110, and similar. The degassing valve 112 thus prevents the pressure within the battery cell 110 from becoming too high, or at least extends a time required for the pressure within the battery cell 110 to reach critical levels, such as may be a risk during thermal runaway of the battery cell 110.

To avoid spreading of thermal runaway as described earlier herein, the battery module 100 includes a plurality of venting tubes 120, that are configured such that each venting tube 120 is responsible for providing an individual conduit for each battery cell 110, such that gas and/or particles released from the degassing valve 112 of the battery cell 110 are not just released out in the open at the location of the degassing valve 112. Instead, the individual conduit provided by the respective venting tube 120 routes such gas and/or particles away from the cell 110 and to outside of a boundary of the battery module 100. The battery module 100 may for example include a housing 130 that may define the boundary of the battery module 100. The housing 130 may e.g. fully enclose all battery cells 110 of the module 100, or partly enclose the battery cells 110 (such as shown in FIG. 1A).

Each venting tube has one end 122 that is arranged at the respective degassing valve 112, and another end 124 that is arranged outside of the boundary of the battery module 130. For example, the battery module 100 may have a longitudinal extension L1, and the conduits may all extend along the longitudinal extension L1 and be sufficiently long such that gasses and/or particles 114 released via the degassing valve 112 are routed to an outside of the boundary (such as the housing 130) of the battery module 100.

**FIG. 1B** schematically illustrates another exemplary battery module 101 as envisaged herein. The battery module 101 is similar to the battery module 100 just described with reference to FIG 1A, but further includes one or more plates 140. Here, each plate 140 has a plurality of through-holes 142, and the plates 140 are arranged such that the through-holes 142 align at least partially with respective degassing valves 112 of the battery cells 110. One plate is arranged on a subset of the battery cells 110, and another plate is arranged on another subset of the battery cells 110. In other examples, it may be envisaged to use e.g. only a single plate with a number of through-holes matching the total number of battery cells of the battery module, or similar, e.g. the exact number of plates may be varied as desirable.

In this example, the venting tubes 120 are not mounted directly to the respective degassing valves 112 but instead mounted/arranged with their respective ends 122 to/at a respective through-hole 142 of the plate(s) 140. This allows all venting tubes 120 belonging to a particular plate 140 to be installed/removed simultaneously to/from already provided battery cells 110, by simply inserting/removing the plate 140 and venting tube 120 combination on/from the corresponding (subset of) battery cells 110.

In other examples, only some of the battery cells 110 may be provided with such a plate 140 and venting tube 120 combination.

The battery modules 100 and 101 as shown in FIGS. 1A and 1B has the advantage that as the gasses and/or particles released from the degassing valves 112 are routed individually outside of the battery module 100, the risk of thermal runaway spread is reduced, as there is no shared conduit through which hot gasses and/or particles from one battery cell is allowed to reach and heat another battery cell, e.g. by reaching the degassing valve of the other battery cell. This is in contrast to contemporary technology, wherein the degassing valves of multiple battery cells are often interconnected using a same manifold/conduit in order to extract the gasses and/or particles out of the battery module. Phrased differently, that the gasses and/or particles are routed via individual conduits means that there is no such shared/same/common manifold, and that there is instead provided separate paths for gasses and/or particles from the respective battery cells.

In some examples, the venting tubes 120 may be formed such that they extend along the longitudinal direction L1 of the battery module 100 such that even if multiple modules 100 are stacked on top of each other, the venting/routing of the gasses and/or particles is still such that they are not routed towards any of the battery modules 100.

In some examples, the venting tubes 120 may be arranged such that the venting tube for each battery cell 110 does not cross (or pass) any other venting tube for any other battery cell 110 of the battery module 100. This may help to further prevent spreading of thermal runaway, in that it reduces the risk of hot gasses and/or particles released from one battery cell 110 being allowed to (further) heat gasses and/or particles present in other venting tubes 120, which may otherwise be the case even if the gasses and/or particles of different venting tubes do not come into direct contact with each other. Likewise, in some examples, the venting tubes 120 may be arranged such that the venting tube for each battery cell 110 does not cross (or pass) any other battery cell 110, such that the risk of gasses and/or particles in one venting tube 120 being allowed to heat any other battery cell 110 is reduced, which may otherwise be the case even if the gasses and/or particles in a venting tube do not come into direct contact of the other battery cell. This further advantageous arrangement is used in the examples shown in FIGS. 1A and 1B, wherein all venting tubes 120 extend parallel to each other and also to the longitudinal extension of each battery cell 110, and the venting tubes 120 do therefore not cross/pass each other or any other battery cell 110. As used herein, that venting tubes do not cross/pass each other may not necessarily mean that they never cross/pass each other, but that they do not cross/pass each other within a distance from the respective degassing valves short enough for the gasses and/or particles released from the degassing valves to still be sufficiently hot to pose a danger to the battery cells and/or to risk cause thermal runaway spread. Phrased differently, it is envisaged that the venting tubes may e.g. pass/cross/butt-up against each other at some point, but then only sufficiently far down the venting path for thermal runaway spread to be avoided.

In some examples, the battery cells 110 all have a rectangular cuboid shape (such as illustrated in FIGS. 1A and 1B), which may help to increase a stacking/packing density of battery cells, and thereby help to increase the overall energy storage density of the battery module as more battery cells may fit in a same volume. This of course because in contrast to e.g. cylindrical battery cells, the battery cells with rectangular cuboid shape may be packed such that there is less (or no) empty space left between two neighboring battery cells. Examples of such battery cells include e.g. prismatic battery cells.

As used herein, a "venting tube" may also be referred to as e.g. a "chimney" or similar. The plurality of individual venting tubes may also be referred to as separate, individual channels of a same venting/exhaust manifold, differing from conventional manifolds used for extracting gases and/or particles from battery cells in that the gases and/or particles from different battery cells are not allowed to come into direct contact with each other, and/or in that gases and/or particles from one battery cell are not allowed to bounce back and forth and reach another battery cell (e.g. reach the degassing valve of this other battery cell).

Although not explicitly shown in any of FIGS. 1A and 1B, it is of course envisaged that the battery cells 110 are interconnected such as suitable for a battery module, e.g. such that they form one or more strings of series connected battery cells or similar in order to increase a total voltage of the battery module to a useable level, and/or such that multiple such strings are connected in parallel to also increase a number of ampere-hours that may be provided by the battery module at its particular total voltage, and similar. This may be achieved by interconnecting the positive and negative battery cell terminals using suitable means, such as one or more cell-to-cell busbars and similar.

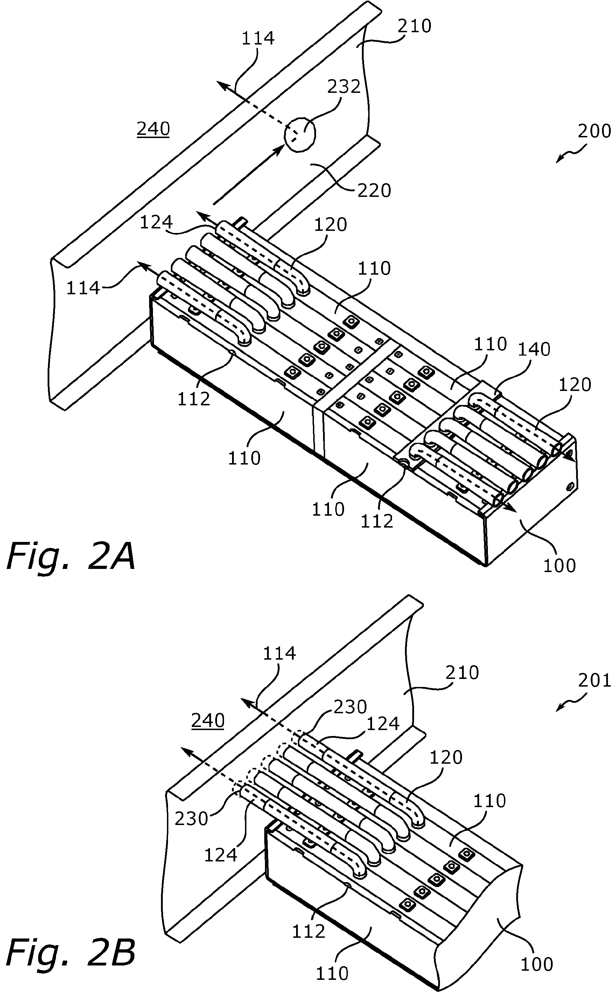

**FIG. 2A** schematically illustrates an exemplary battery pack 200 according to one or more examples of the present disclosure. In this particular example, the battery pack 200 includes the battery module 100 (or 101) as described above with reference to FIGS. 1A and 1B. In other examples, there may be no explicit battery modules, and the battery cells 110 may instead form part of a so-called cell-to-pack architecture, which may further help to increase the overall energy storage density as the space otherwise consumed by e.g. module housings and similar may instead be occupied by additional battery cells, and similar.

The battery pack 200 includes a battery pack housing 210, of which only a part is shown in FIG. 2A. The battery pack housing 210 may for example be a box enclosing the battery cells 110, or similar. The various venting tubes 120 (which are here considered as forming part of the battery pack 200 and not necessarily any battery module) are configured such that they individually route gasses and/or particles 114 released from degassing valves 112 of the battery packs 110 to an inside compartment 220 of the battery pack housing 210 and/or through at least one opening 230 of the battery pack housing 210.

Such a compartment 220 of the battery pack housing 210 may for example be a volume within the battery pack housing 210 wherein the gasses and/or particles 114 can be collected and preferably confined, such that the gasses and/or particles are not allowed to freely move within the battery pack housing 210, and e.g. such that the gasses and/or particles may be kept isolated from the battery cells 110 at least until the gasses and/or particles have had sufficient time to cool down to a temperature that poses no or less harm to the battery cells.

The at least one opening of the housing 210 may for example be (or be provided via) one or more (gas and/or particle) release valves 232 arranged on one or more containing surfaces of the housing 210. Such valves may also be referred to as e.g. "breather valves" or similar. The one or more valves 232 may for example be configured to open if a pressure within the housing 210 exceeds a certain threshold, in order to avoid pressure build-up within the housing to a level at which there is risk of causing danger and/or damage to the battery housing 210 and/or other parts of the battery pack 200. Such release valves 232 may be present also in contemporary battery pack housings, but as envisaged herein the present disclosure proposes to route gasses and/or particles in individual conduits/tubes to such release valves 232, or to at least the inside compartment 220 capable of receiving gasses and/or particles from multiple battery cells 110 and provide confinement thereof. Through the one or more release valves 232 of the housing 210, the gasses and/or particles 114 are thus routed to an outside 240 of the battery pack 200, wherein the risk of e.g. gasses and/or particles from one battery cell negatively affecting another battery cell are further reduced or even minimized or eliminated.

**FIG. 2B** schematically illustrates (at least part of) yet another exemplary battery pack 201 similar to the battery pack 201, but wherein the venting tubes 120 are configured such that the gasses and/or particles 114 from each battery cell 110 are individually routed all the way to the outside 240 of the battery pack housing 210 and battery pack 200. This is achieved by providing a plurality of openings 230 through e.g. a confining surface (such as a wall) of the battery pack housing 210, and by extending the venting tubes 120 through respective such openings 230. In this particular solution, there is therefore no possibility for the gasses and/or particles from different battery cells 110 to ever meet within the battery pack housing 210, which may further help to reduce the risk of thermal runaway spread.

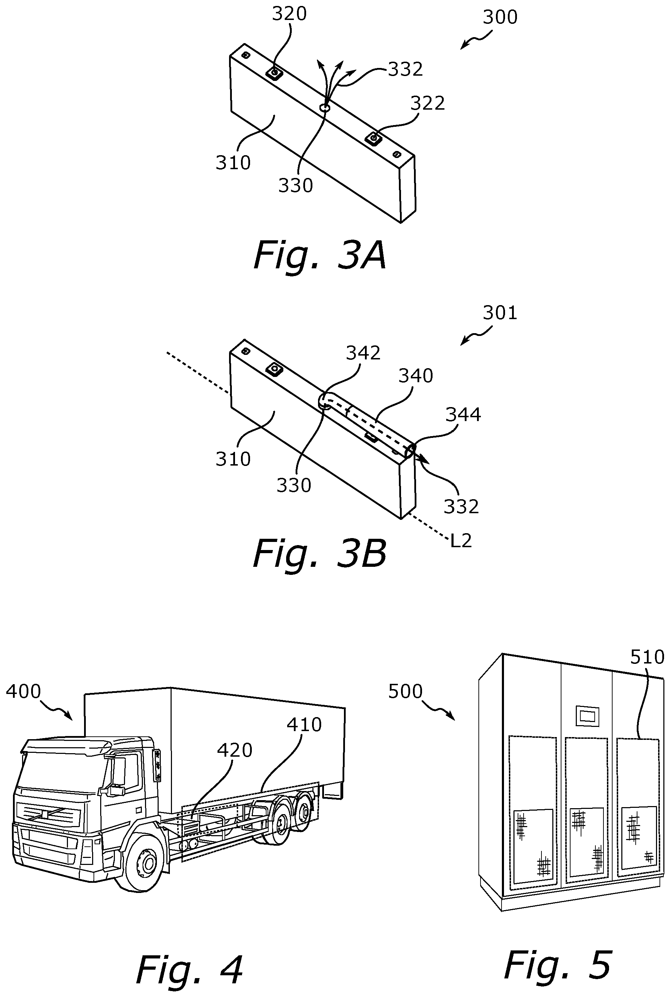

**FIG.** 3A schematically illustrates an exemplary battery cell 300. The battery cell 300 has a rectangular cuboid shape (e.g. the cell 300 is a prismatic battery cell 300). The battery cell 300 includes a positive terminal 320 and a negative terminal 322, that may be used to e.g. connect the battery cell 300 in series and/or parallel with one or more other battery cells as part of a battery module and/or battery pack. The battery cell 300 further includes a degassing valve 330 as described herein, through which gasses and/or particles 332 may be released in case there is sufficient pressure-buildup within the battery cell 330. The battery cell 330 may for example include a housing 310. In contemporary technology, such as in contemporary battery modules and/or battery packs, solutions are available in which the released gasses and/or particles 332 are allowed to move around freely and e.g. come into contact with gasses and/or particles released from other battery cells, and other into contact with one or more other battery cells, with the negative drawbacks thereof as already discussed herein. Other solutions include using a single manifold to route gasses and/or particles from the degassing valves 330 of multiple battery packs, a solution that only partially solves this issue as the gasses and/or particles may still be allowed to interact inside such a manifold, and to e.g. travel from one battery cell to the next battery cell, and similar.

**FIG. 3B** schematically illustrates an exemplary battery cell 301 according to one or more examples of the present disclosure. The battery cell 301 is similar to the cell 300, but is provided with/includes a venting tube 340 (such as the venting tube(s) 120), that provides an individual conduit for the gasses and/or particles released from the degassing valve 330, and such that these gasses and/or particles are routed to an outside boundary of the battery cell 301. Such an outside boundary may for example be defined by the housing 310 of the battery cell 301. One end 342 of the tube 340 is attached to/provided at the degassing valve 330, and another end 344 of the tube 340 is located outside the boundary of the battery cell 301. As shown in FIG. 3B, the venting tube 340 may be arranged such that it extends along a longitudinal extension L2 of the battery cell 300. This may be advantageous as battery cells such as 301 are often arranged side by side with their longitudinal sides facing each other, and by routing the gasses and/or particles along the longitudinal direction, no routing across neighboring battery cells is required. The venting tube 340 extending along the longitudinal direction L2 may also have the advantage that when multiple battery cells are located above each other, such as if stacking multiple battery modules on top of each other, venting of the gasses and/or particles is still possible without the gasses and/or particles being routed towards any other battery cell.

The battery cell 301 may e.g. correspond to the combination of battery cell 110 and venting tube 120 as described already with reference to FIGS. 1A, 1B, 2A and 2B.

**FIG. 4** schematically illustrates an exemplary heavy electric vehicle according to one or more examples of the present disclosure, here in the form of a truck 400. There is, as already mentioned herein, of course also envisaged for the heavy electric vehicle to be some other type of vehicle, such as a bus, tractor, hauler, dumper truck, crane, wheel/front loader, or any other heavy vehicle used to transport/move goods and/or people. The truck 400 includes at least one electrical machine (not explicitly shown, but illustrated by the dashed box 410) that are used to propel the truck 400. As envisaged herein, an electrical machine may e.g. be an electric motor, or any other device capable of converting electrical energy into mechanical energy for propelling a vehicle. The truck/vehicle 400 further includes at least one battery pack 420 as described herein. The truck/vehicle 400 may thus be made more safer, in that the construction of its battery pack 420 is such that it reduces the risk of thermal runaway spread, which may otherwise pose both material and personal danger as thermal runaway spread may quickly lead to e.g. uncontrolled fire, smoke generation and/or even explosions, that may be of harm to both e.g. a driver and/or passenger of the vehicle 400 as well as to any nearby vehicles and/or living beings.

**FIG. 5** schematically illustrates an exemplary energy storage system 500 according to one or more examples of the present disclosure. The energy storage system 500 serves to illustrate that a battery pack as envisaged herein is not only usable within electric vehicles, but may also be used in other energy storage system than those of such electric vehicles. The energy storage system 500 includes at least one battery pack 510 as described herein. The battery pack 510 may for example form part of a battery bank, and the energy storage system 500 may be used to provide e.g. support for an energy grid during peak-usage, or similar. Other envisaged uses of the energy storage system 500 is to provide power to e.g. a building or similar, or to any other device, arrangement and similar for which provision of electrical energy is needed. For example, it is envisaged that such a battery pack 510 has been harvested from an electric vehicle (so-called "second life", or "second use"), as a battery pack no longer deemed capable of providing energy for a vehicle may still be useful in powering e.g. one or more home appliances, for providing backup services, or similar less demanding applications, such as in/for various grid solutions, off-grid solutions, and similar. In any situation, the risk of thermal runaway in one or more battery cells remain, and the envisaged individual venting of battery cells as proposed herein is still useful in that it may reduce the risk of thermal runaway spread within the battery pack, and ultimately between battery packs, as described herein, even if the battery pack is not used in an electric vehicle.

As a summary of all of the above, the present disclosure thus improves upon currently available technology in that it provides an improved way of venting of gasses and/or particles from battery cells of e.g. a battery module and/or battery pack, in particular by providing individual venting channels/conduits/tubes that avoids the problem of hot gasses and/or particles from a battery pack experiencing thermal runaway moving around and interacting with other battery cells (and thereby heating also these other battery cells). Phased differently, the problem of thermal runaway spread is solved by not using e.g. a common venting chimney/conduit for all battery packs (or for at least multiple batter packs), but instead providing individual venting tubes that do not interact (if at all) until sufficiently further down the venting path for the gasses and/or particles to cool down to non-dangerous levels.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:
Example 1: A battery pack (200) for a heavy electric vehicle (300), including: a battery pack housing (210); a plurality of battery cells (110) provided within said battery pack housing, wherein each battery cell includes a degassing valve (112) for releasing gas and/or particles from within the battery cell, and a plurality of venting tubes (120) including at least one individual venting tube for each battery cell, wherein the at least one venting tube for each battery cell is configured to provide an individual conduit for routing of gas and/or particles (114) from the degassing valve of the battery cell through one or more openings (230) of the battery pack housing.
Example 2: The battery pack of example 1, including one or more battery modules (100), wherein the battery cells of the battery pack are battery cells of the one or more battery modules.
Example 3: The battery pack of example 1 or 2, wherein the battery pack housing includes one or more gas and/or particle release valves (232).
Example 4: The battery pack of example 3, wherein at least one of the one or more release valves of the battery pack housing provide the one or more openings of the battery pack housing.
Example 5: The battery pack of any one of examples 1 to 4, wherein the venting tubes are configured such that each venting tube does not cross and/or pass any other venting tube, and/or such that each venting tube for each battery cell does not cross and/or pass any other battery cell.
Example 6: The battery pack of any one of examples 1 to 5, further including a plate (140) having a plurality of through-holes (142) and positioned on at least some of the plurality of battery cells such that each through-hole is at least partially aligned with a respective degassing valve, and wherein one end (122) of a respective venting tube is connected to a respective trough-hole of the plate.
Example 7: The battery pack of any one of examples 1 to 6, wherein the battery cells have rectangular cuboid shapes.
Example 8: The battery pack of any one of examples 1 to 7, wherein the battery cells are prismatic battery cells.
Example 9: The battery pack of any one of examples 1 to 8, wherein the venting tubes are configured such that they extend parallel with each other.
Example 10: A heavy electric vehicle (400), including: at least one electrical machine (410) for propelling the vehicle, and a battery pack (200, 420) according to any one of examples 1 to 9 for powering the at least one electrical machine.
Example 11: An energy storage system (500), including: at least one battery pack (200, 510) according to any one of examples 1 to 9 for storing electrical energy.

## Claims

1. A battery pack (200) for a heavy electric vehicle (400), comprising:
- a battery pack housing (210);
- a plurality of battery cells (110) provided within said battery pack housing, wherein each battery cell comprises a degassing valve (112) for releasing gas and/or particles from within the battery cell, and
- a plurality of venting tubes (120) comprising at least one individual venting tube for each battery cell,
**characterized by** the at least one venting tube for each battery cell being configured to provide an individual conduit for routing of gas and/or particles (114) from the degassing valve of the battery cell through one or more openings (230) of the battery pack housing.

2. The battery pack of claim 1, comprising one or more battery modules (100), wherein the battery cells of the battery pack form part of the one or more battery modules.

3. The battery pack of claim 1 or 2, wherein the battery pack housing comprises one or more gas and/or particle release valves (232).

4. The battery pack of claim 3, wherein at least one of the one or more release valves of the battery pack housing provide the one or more openings of the battery pack housing.

5. The battery pack of any one of claims 1 to 4, wherein the venting tubes are configured such that each venting tube does not cross and/or pass any other venting tube, and/or such that each venting tube for each battery cell does not cross and/or pass any other battery cell.

6. The battery pack of any one of claims 1 to 5, further comprising a plate (140) having a plurality of through-holes (142) and positioned on at least some of the plurality of battery cells such that each through-hole is at least partially aligned with a respective degassing valve, and wherein one end (122) of a respective venting tube is connected to a respective trough-hole of the plate.

7. A heavy electric vehicle (400), comprising:
- at least one electrical machine (410) for propelling the vehicle, and
- a battery pack (200, 420) according to any one of claims 1 to 6 for powering the at least one electrical machine.

8. An energy storage system (500), comprising:
- at least one battery pack (200, 510) according to any one of claims 1 to 6 for storing electrical energy.

## Patentansprüche

1. Batteriepack (200) für ein schweres Elektrofahrzeug (400), umfassend:
- ein Batteriepackgehäuse (210);
- eine Vielzahl von Batteriezellen (110), die innerhalb des Batteriepackgehäuses vorgesehen sind, wobei jede Batteriezelle ein Entgasungsventil (112) umfasst, um Gas und/oder Partikel von innerhalb der Batteriezelle freizulassen, und
- eine Vielzahl von Entlüftungsrohren (120), die mindestens ein einzelnes Entlüftungsrohr für jede Batteriezelle umfassen,
**gekennzeichnet durch** das mindestens eine Entlüftungsrohr für jede Batteriezelle, das dazu konfiguriert ist, eine einzelne Leitung bereitzustellen, um Gas und/oder Partikeln (114) vom Entgasungsventil der Batteriezelle durch eine oder mehrere Öffnungen (230) des Batteriepackgehäuses abzuführen.

2. Batteriepack nach Anspruch 1, das ein oder mehrere Batteriemodule (100) umfasst, wobei die Batteriezellen des Batteriepacks einen Teil des einen oder der mehreren Batteriemodule bilden.

3. Batteriepack nach Anspruch 1 oder 2, wobei das Batteriepackgehäuse ein oder mehrere Gas- und/oder Partikelablassventile (232) umfasst.

4. Batteriepack nach Anspruch 3, wobei mindestens eines des einen oder der mehreren Ablassventile des Batteriepackgehäuses die eine oder die mehreren Öffnungen des Batteriepackgehäuses bereitstellt.

5. Batteriepack nach einem der Ansprüche 1 bis 4, wobei die Entlüftungsrohre derart konfiguriert sind, dass jedes Entlüftungsrohr kein anderes Entlüftungsrohr kreuzt und/oder daran vorbei verläuft, und/oder derart, dass jedes Entlüftungsrohr für jede Batteriezelle keine andere Batteriezelle kreuzt und/oder daran vorbei verläuft.

6. Batteriepack nach einem der Ansprüche 1 bis 5, das ferner eine Platte (140) umfasst, die eine Vielzahl von Durchgangslöchern (142) aufweist und auf mindestens einigen der Vielzahl von Batteriezellen derart positioniert ist, dass jedes Durchgangsloch mindestens teilweise mit einem jeweiligen Entgasungsventil ausgerichtet ist, und wobei ein Ende (122) eines jeweiligen Entlüftungsrohrs mit einem jeweiligen Durchgangsloch der Platte verbunden ist.

7. Schweres Elektrofahrzeug (400), umfassend:
- mindestens eine elektrische Maschine (410) zum Antreiben des Fahrzeugs, und
- ein Batteriepack (200, 420) nach einem der Ansprüche 1 bis 6 zum Versorgen der mindestens einen elektrischen Maschine mit Strom.

8. Energiespeichersystem (500), umfassend:
- mindestens ein Batteriepack (200, 510) nach einem der Ansprüche 1 bis 6 zum Speichern von elektrischer Energie.

## Revendications

1. Bloc-batterie (200) pour véhicule électrique lourd (400), comprenant :
- un boîtier de bloc-batterie (210) ;
- une pluralité de cellules de batterie (110) prévues à l'intérieur dudit boîtier de bloc-batterie, chaque cellule de batterie comprenant une soupape de dégazage (112) pour libérer du gaz et/ou des particules de l'intérieur de l'cellule de batterie, et
- une pluralité de tubes de ventilation (120) comprenant au moins un tube d'aération individuel pour chaque cellule de batterie,
**caractérisé en ce que** l'au moins tube de ventilation pour chaque cellule de batterie est configuré pour créer un conduit individuel pour acheminer le gaz et/ou les particules (114) de la soupape de dégazage de la cellule de batterie à travers une ou plusieurs ouvertures (230) du boîtier de bloc-batterie.

2. Bloc-batterie selon la revendication 1, comprenant un ou plusieurs modules de batterie (100), dans lequel les cellules de batterie du bloc-batterie font partie du ou des modules de batterie.

3. Bloc-batterie selon la revendication 1 ou 2, dans lequel le logement du bloc-batterie comprend une ou plusieurs soupapes de libération de gaz et/ou de particules (232).

4. Bloc-batterie selon la revendication 3, dans lequel au moins une des une ou plusieurs soupapes de libération du boîtier du bloc-batterie crée la ou les plusieurs ouvertures du logement du bloc-batterie.

5. Bloc-batterie selon l'une quelconque des revendications 1 à 4, dans lequel les tubes de ventilation sont configurés de telle sorte que chaque tube de ventilation ne traverse et/ou ne passe pas par un autre tube de ventilation, et/ou de telle sorte que chaque tube de ventilation pour chaque cellule de batterie ne traverse et/ou ne passe pas par une autre cellule de batterie.

6. Bloc-batterie selon l'une quelconque des revendications 1 à 5, comprenant en outre une plaque (140) ayant une pluralité de trous traversants (142) et positionnée sur au moins certains de la pluralité de cellules de batterie de telle sorte que chaque trou traversant soit au moins partiellement aligné avec une soupape de dégazage respective, et dans lequel une extrémité (122) d'un tube de ventilation respectif est connectée à un trou traversant respectif de la plaque.

7. Véhicule électrique lourd (400), comprenant :
- au moins une machine électrique (410) pour la propulsion du véhicule, et
- un bloc-batterie (200, 420) selon l'une quelconque des revendications 1 à 6 pour alimenter l'au moins une machine électrique.

8. Système de stockage d'énergie (500), comprenant :
- au moins un bloc-batterie (200, 510) selon l'une quelconque des revendications 1 à 6 pour le stockage d'énergie électrique.
